# EUROPÄISCHE PATENTSCHRIFT

(11) **EP 0 661 196 B1**
(45) Veröffentlichungstag und Bekanntmachung des Hinweises auf die Patenterteilung: **11.03.1998**
(21) Anmeldenummer: 94119094.4
(22) Anmeldetag: 03.12.1994
(51) Int. Cl.: B60S 9/02, B66C 23/78, E04G 21/04

(54) **Fahrzeug mit schwenkbar aufgebautem Mast und Rahmenabstützung**
Vehicle with rotatable mast and frame support
Véhicule avec mât orientable et chassis stabilisé

(30) Priorität: 28.12.1993 DE 4344779
(43) Veröffentlichungstag der Anmeldung: 05.07.1995
(73) Patentinhaber: Schwing GmbH, D-44653 Herne (DE)
(72) Erfinder: Heckmann, Horst, D-45549 Sprockhövel (DE)
(74) Vertreter: Herrmann-Trentepohl, Werner, Dipl.-Ing.

(56) Entgegenhaltungen:
- DE-A- 3 122 725
- US-A- 2 740 538
- US-A- 3 194 414
- Prospekt "Mitsubishi A1000B, HA00-01326, (2.0) 82-11"

## Beschreibung

Die Erfindung betrifft ein Fahrzeug mit aufgebautem schwenkbaren Mast und eine Rahmenabstützung gemäß dem Oberbegriff des Anspruches 1. Ein derartiges Fahrzeug ist aus dem Mitsubishi-Prospekt "A1000B", Nr HA00-01326, (2.0) 82-11, bekannt.

Solche Fahrzeuge werden als Straßenfahrzeuge für verschiedene Zwecke vorgesehen. Die Erfindung bezieht sich insbesondere auf Fahrzeuge mit aufgebauter Betonpumpe, wobei der Mast als Verteilermast dient, welcher eine Betonförderleitung trägt, so daß der von der Pumpe geförderte Beton austritt. Die Erfindung wird im folgenden im wesentlichen anhand dieser bevorzugten Ausführungsform der Erfindung näher erläutert.

In der Regel müssen leistungsfähige Fahrzeuge der hier in Rede stehenden Art mit weit ausladenden Masten versehen werden. Bei fahrbaren Betonpumpen erfordern die notwendigen Auslagen des Mastes dessen Unterteilung mit Betriebsgelenken, welche auch das Zusammenklappen des Mastes für den Fahrbetrieb ermöglichen. Solche Masten erreichen beträchliche Höhen und lösen ein von der Ausladung und der Länge des Mastes abhängiges Kippmoment aus. Die Rahmenabstützung trägt das Kippmoment auf der Standfläche des Fahrzeuges ab und verhindert dadurch das Umschlagen des Fahrzeuges mit dem Mast. Die Entwicklung derartiger Fahrzeuge unterliegt dem Zwang, wegen der erwachsenen Anforderungen ständig wachsende Mastlängen und Reichweiten vorzusehen, jedoch das Fahrzeugprofil für den Fahrbetrieb einzuhalten. Bei fahrbaren Betonpumpen kommt es dabei in der Regel darauf an, die zulässige Fahrzeugbreite nicht zu überschreiten, um Einschränkungen für Sondertransporte zu vermeiden, die bei Überbreiten des Fahrzeuges gefordert werden.

Die Rahmenabstützung erfolgt in der Regel auf vier Punkten, insbesondere wenn das Drehwerk des Mastes einen unbegrenzten Schwenkwinkel zuläßt. Für die Abstützung ergibt sich dann, das für Kippmomente im wesentlichen um die Querachse des Fahrzeuges geringere Probleme als bei der Abstützung von Kippmomenten um die Fahrzeuglängsachse entstehen. Das liegt u. a. daran, daß das Fahrzeuggewicht ein erheblich größeres Moment um die Querachse als um die Längsachse erzeugt, welches dem Kippmoment des Mastes entgegenwirkt. Da aber in den meisten Fällen die Schwenkbarkeit des Mastes im Drehwerk nicht auf Kippmomente um die Querachse beschränkt werden kann, ergeben sich bei entsprechenden Mastlängen für die Abstützung lange Träger und Schwierigkeiten, diese Träger für den Fahrbetrieb im Fahrzeugprofil unterzubringen.

Die Erfindung geht von einem vorbekannten Fahrzeug aus, auf dessen Fahrgestell eine Betonpumpe und ein Verteilermast aufgebaut ist, dessen Drehwerk wie bei derartigen Fahrzeugen üblich in unmittelbarer Nähe des Fahrerhauses auf dem Fahrgestell bzw. einem Hilfsrahmen des Fahrgestells aufgebaut ist, während der Fülltrichter der Betonpumpe am Fahrzeugheck liegt und Teile der Betonfördereinrichtung in der Fahrzeugmitte angeordnet sind. Bei diesem Fahrzeug sind für die Vierpunktrahmenabstützung vier Träger vorgesehen. Die vordere Rahmenabstützung weist fahrzeugfest bogenförmige Teleskope auf, in denen die Träger so angeordnet sind, daß sie zwischen Fahrerhaus und Drehwerk ansetzen und nach vorn ausgestreckt werden können. Die beiden rückwärtigen Träger sind dagegen in linearen Teleskopen untergebracht.

Die Führungen und die in diesen verschieblichen Träger müssen innerhalb der beiden seitlichen Begrenzungen des Fahrzeugprofiles für den Fahrbetrieb bleiben, wobei die Führungen etwas verkürzt sind, um die an den freien Enden der Träger angeordneten, meistens aus- und einfahrbaren Bodenstützen innerhalb des Fahrzeugprofiles für den Fahrbetrieb unterbringen zu können. Für die vordere Rahmenabstützung ergibt sich hieraus die Beschränkung auf kurze Auszugslängen der Träger und entsprechend verkürzte Führungen. Außerdem führt die nach hinten in Richtung auf das Fahrzeugheck weisende konvexe Krümmung der Führungen und Träger dazu, daß die Stützen nach vorn und in die Nähe der Fahrzeuglängsachse ausgestreckt werden, so daß sich der seitliche Abstand der Stützpunkte von der Fahrzeuglängsachse verkürzt. Das vorbekannte Fahrzeug eignet sich deshalb nicht für Masten mit großen Längen und Ausladungen sowie für unbegrenzt schwenkbare Drehwerke.

Die Erfindung geht demgegenüber einen anderen Weg, dessen Grundgedanke im Anspruch 1 wiedergegeben ist. Weitere Merkmale der Erfindung sind Gegenstand der Unteransprüche.

Gemäß der Erfindung wird durch die tangential zur Längsmitte orientierte Bogenform der Führungen und Träger erreicht, daß die Stützen weiter zur Seite des Fahrzeuges ausfahren, so daß dem Kippen des Fahrzeuges um die eine oder andere Fahrzeuglängsseite wirksam entgegengewirkt wird. Dadurch, daß die Führungen sich mit ihren beiden Endpunkten der jeweiligen Profilseite des Fahrzeuges annähern, ergeben sich je nach der erforderlichen Stützweite lange Träger, die für den Fahrbetrieb im Fahrzeugprofil untergebracht werden können. Diese Träger sind um so länger, je näher der Scheitel der Krümmung der Führungen der Fahrzeugmitte angenähert wird. Das findet seine Grenze lediglich an anderen Fahrzeugaufbauten, die in der Längsmitte des Fahrzeuges untergebracht werden müssen, bei bei fahrbaren Betonpumpen beispielsweise mit einem Teil der Fördereinrichtung der Fall ist.

Erfindungsgemäß wird mindestens die vordere Rahmenabstützung in dieser Weise verwirklicht. Dadurch wird berücksichtigt, daß bei Fahrzeugen, bei denen das Drehwerk des Mastes aus der Fahrzeugmitte nach vorn verlegt ist, die seitliche Stützweite der vorderen Rahmenabstützung die kritische ist und daher vor allem vergrößert werden muß. Bei fahrbaren Betonpumpen ist das regelmäßig der Fall, was sich aus der Unterbringung der Betonpumpe auf dem Fahrzeugrahmen ergibt. Wegen der Beschickung der Betonpumpe am Fahrzeugheck werden außerdem in der Regel die vorderen Auslagen des Mastes bevorzugt, soweit es die örtlichen Verhältnisse zulassen.

Vorzugsweise werden auch bei dem erfindungsgemäßem Fahrzeug Teleskope verwendet, um die Träger zu führen. Das ist Gegenstand des Anspruches 2.

Eine Optimierung der Länge der Träger und Führungen ergibt sich mit den Merkmalen des Anspruches 3. Da hierbei die Führungen der Abstützung an dem Drehwerk ansetzen und auf einem Kreisbogen liegen, ergibt sich hier nicht nur eine vereinfachte Konstruktion, sondern auch die Möglichkeit, die Krümmungen der Führungen möglichst weit in die Mitte des Fahrzeuges zu verlegen. Bei diesen Ausführungsformen der Erfindung wird stets auch eine hintere Abstützung vorgesehen, so daß sich an jeder belasteten Fahrzeugseite eine zusätzliche Abstützung nach hinten ergibt. Die dazu erforderliche Führung soll ihrerseits im Bereich des Fahrzeughecks ansetzen, um eine optimale Stützweite zu erreichen. Der Anspruch 4 beschreibt eine Ausführungsform der Erfindung, bei der sich eine Vierpunktabstützung an beiden Fahrzeuglängsseiten ergibt.

Obwohl wegen der geschilderten Einsatzbedingungen bei Fahrzeugen der erfindungsgemäßen Art mit aus der Fahrzeugmitte nach vorn verlegten Drehwerken zur vorderen Rahmenabstützung das Hauptaugenmerk zukommt, hat es sich doch als zweckmäßig erwiesen, die Form der vorderen Rahmenabstützung auf die hintere Rahmenabstützung zu übertragen. Das ist Gegenstand des Anspruches 5. Solche Fahrzeuge haben den Vorzug, das sie auch die rückwärtigen Abstützpunkte weiter zur Seite des Fahrzeuges verlegen, so daß dem Kippen des Fahrzeuges um seine Fahrzeuglängsachse entgegengewirkt wird.

Bei Abstützungen dieser Art sind gemäß dem Anspruch 5 die Führungen in einer gemeinsamen horizontalen Ebene konzentrisch angeordnet, so daß man in den darüber und darunterliegenden Ebenen zusätzlich Platz auf dem Fahrzeug gewinnt. Die davon abweichende Ausführungsform der Erfindung, bei der die Führungen in horizontalen parallelen Ebenen angeordnet sind hat dagegen die Wirkung, daß die Führungen optimal lang ausgebildet und innerhalb des Fahrzeugprofils untergebracht werden können, wobei man den zur Verfügung stehenden Platz der Höhe nach für die Führungen ausnutzen kann.

Andererseits bietet die Erfindung genügend Freiheit bezüglich der Einzelheiten der zur ihrer Verwirklichung notwendingen Konstruktion. Ausführungsformen mit den Merkmalen des Anspruches 7 erlauben es, je nach den Erfordernissen des Einzelfalles die hinteren Abstützungen abweichend von den vorderen Abstützungen auszubilden, wenn dies aus bestimmenden Gründen erforderlich ist. Dabei kann man die Merkmale des Anspruches 8 verwirklichen, welche für die hintere Rahmenabstützung ein Gelenk zur Verbindung der Führungen mit dem Rahmen vorsehen. Dieses Gelenk ist im Bereich des Drehwerks angeordnet, um die zur Verfügung stehende Länge am Fahrzeugprofil voll ausnutzen zu können.

Solche Gelenke lassen sich aber auch mit den Merkmalen des Anspruches 9 weiter in Richtung auf das Fahrzeugheck verlegen, was dann in der Regel dazu führt, daß sich optimale Stützweiten auch der rückwärtigen Rahmenabstützung ergeben.

Die bevorzugte Ausführungsform der Erfindung, wonach die Träger in Teleskopen untergebracht werden, läßt es auch zu, die Handhabung der Rahmenabstützung wesentlich dadurch zu vereinfachen, daß die aufgrund ihrer Länge und ihrer Belastung schweren Träger nicht mehr von Hand bewegt zu werden brauchen, sondern einen eigenen Antrieb erhalten. Dadurch wird überdies die Sicherheit gesteigert, da sich derartige Antriebe so ausgestalten lassen, daß sie über die gesamte Stützweite wirksam sind.

Die Einzelheiten, weiteren Merkmale und andere Vorteil der Erfindung ergeben sich aus der nachfolgenden Beschreibung von Ausführungsformen anhand der Figuren in der Zeichnung; es zeigen
- Fig. 1: in Draufsicht eine erste Ausführungsform der Erfindung,
- Fig. 2: in Seitenansicht eine erste Ausführungsform der Erfindung,
- Fig. 3: in der Fig. 1 entsprechender Darstellung eine weitere Ausführungsform,
- Fig. 4: in der Fig. 2 entsprechender Darstellung die Ausführungsform nach Fig. 3,
- Fig. 5: eine abgeänderte Ausführungsform in den Fig. 1 und 3 entsprechender Darstellung,
- Fig. 6: die Ausführungsform nach Fig. 5 in einer den Fig. 2 und 4 entsprechender Darstellung,
- Fig. 7: eine weiter abgeänderte Ausführungsform in den Fig. 1, 3 und 5 entsprechender Darstellung,
- Fig. 8: den Gegenstand der Fig. 7 in einer den Fig. 2, 4 und 6 entsprechenden Ansicht,
- Fig. 9: eine andere Ausführungsform in den Fig. 1, 3, 5 und 7 entsprechender Darstellung und
- Fig. 10: eine Ansicht des Gegenstandes der Fig. 9 in den Fig. 2, 4, 6 und 8 entsprechender Darstellung.

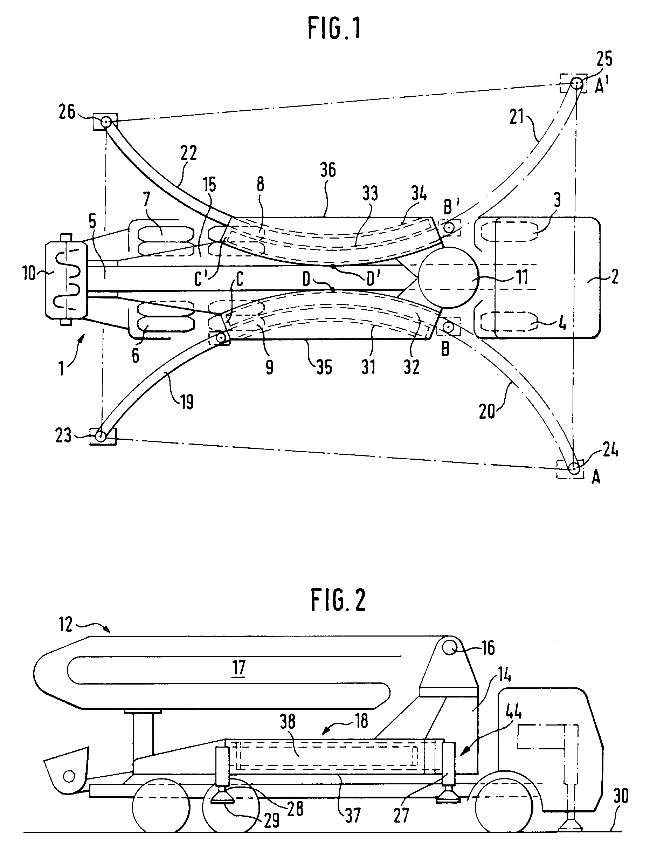

In den Fig. 1 bis 9 sind in strichpunktierter Darstellung die jeweils ausgezogenen Längen der Träger der Rahmenabstützung gezeichnet, wobei gestrichelte Darstellungen die nicht in den Figuren erscheinenden, jedoch für das Verständnis erforderlichen Einzelheiten wiedergeben.

Wie sich aus dem Ausführungsbeispiel nach den Fig. 1 und 2 ergibt, weist ein Lkw-Fahrgestell 1 vorn ein Fahrerhaus 2 und eine einfach bereifte Lenkung 3, 4 sowie einen Chassisträger 5 auf, an dem die jeweils doppelt bereiften Hinterachsen 6 bis 9 aufgehängt sind. Auf dem Fahrgestell 5 ist gemäß dem Ausführungsbeispiel eine Betonpumpe aufgebaut, deren Fülltrichter 10, über den die Betonpumpe von einem Mischer beaufschlagt wird, am Heck angeordnet ist.

Hinter dem Fahrerhaus 2 befindet sich das Drehwerk 11 eines Betonverteilermastes 12. Das Drehwerk sitzt auf einem Rahmen 14, der seinerseits über einen Hilfsrahmen 15 auf dem Fahrgestellrahmen verlagert ist. Der Mast 12 ist über ein horizontales Betriebsgelenk 16 angelenkt und in Sektionen unterteilt, die ihrerseits mit nicht dargestellten Betriebsgelenken untereinander verbunden sind. Dadurch läßt sich der Mast wie aus Fig. 2 ersichtlich und bei 17 dargestellt zusammenklappen. Andererseits kann der Mast durch Entfalten gestreckt werden, was in den Figuren im einzelnen nicht dargestellt ist.

Auf dem Hilfsrahmen 15 ist eine allgemein mit 18 bezeichnete Rahmenabstützung angeordnet. Im Ausführungsbeispiel nach den Fig. 1 und 2 handelt es sich um eine Vierpunktabstützung mit Hilfe von vier Trägern 19 bis 22, die an ihren freien Enden Stützen 23 bis 26 tragen. Diese Stützen sind im wesentlichen identisch ausgebildet und teleskopierbar. Dabei sitzen die Außenteleskope 27 an den jeweiligen Trägern 19 bis 22, während die Innenteleskope 28 mit Bodenplatten 29 versehen sind, welche den Stützdruck auf die Standfläche 30 übertragen.

In der Darstellung der Fig. 2 sind die Stützen 23 bis 26 in ausgezogenen Linien für den Fahrbetrieb dargestellt. Rechts in Fig. 2 im Bereich des Fahrerhauses 2, d. h. in der strichpunktierten Darstellung der Fig. 1 sind in strichpunktierter Darstellung die ausgezogenen Stützen wiedergegeben. Daraus ist ersichtlich, daß bei ausgezogenen Stützen 23 bis 26 das Fahrzeug von der Aufstandsflfäche 30 abgehoben und eine verwindungssteife Konstruktion aus dem Rahmen 15 den Trägern 19 bis 22 sowie den Stützen 23 bis 26 die von Mast 12 ausgehenden Kräfte auf der Aufstandsfläche 30 abträgt.

Den Trägern 19 sind Führungen 31 bis 34 in horizontaler Ebene zugeordnet. Diese Führungen befinden sich im wesentlichen zwischen den Fahrzeugprofillängsseiten 35, 36. Sie sind jedoch tangential zur Fahrzeuglängsrichtung angeordnet und erstrecken sich jeweils von einer der Fahrzeugprofillängsseiten 35, 36 nach innen im wesentlichen bis zur Fahrzeugmitte, die durch den Träger 5 im Ausführungsbeispiel gegeben ist und von dieser weiter bis zu derselben Fahrzeugprofillängsseite 34, 35.

Die Führungen sind in einem Hohlprofilabschnitt 37 untergebracht, jedoch im einzelnen nicht dargestellt. Es kann sich dabei um Gleitbahnen handeln, die eine drehfeste Führung für die Träger 19 bis 22 gewährleisten. Zur Gewährleistung besserer Gängigkeit der Träger 19 bis 22 in den Hohlprofilen 37 können dann die Führungen auch ganz oder zum Teil aus Wälzkörpern bestehen. Die Träger 19 bis 22 bilden zusammen mit den Trägern 37 Teleskope, die allgemein in Fig. 2 mit 38 bezeichnet sind.

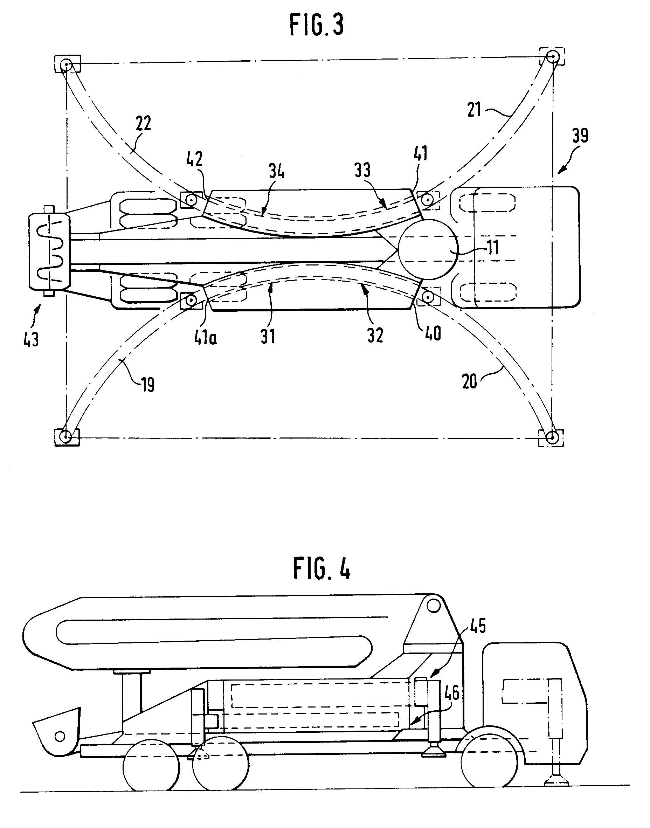

Wie sich insbesondere aus der Darstellung der Fig. 3 ergibt, setzen die Führungen 32, 33 der vorderen Rahmenabstützung 39 mit den Stützen 24 und 25 bei 40 und 41 im Bereich des Drehwerkes 11 an und folgen einem Kreisbogen. Die Abstützung 39 wird ergänzt durch eine weitere Abstützung 43, die dem Fahrzeugheck zugeordnet ist, wobei deren Führungen 31 und 34 bei 41a und 42 am Heck 43 ansetzen. Ansetzen bedeutet das überschiebende Ende des Teleskopes 38 der Führungen 31 bis 34.

Die beiden Abstützungen 39 und 40 bestehen jeweils aus einem Paar der Träger 19, 22 bzw. 20, 21, wodurch jeweils an einer durch das Fahrzeugprofil 35 bzw. 36 gegebenen Fahrzeugseite ein Träger des Trägerpaares 19, 22 bzw. 20, 21 angeordnet ist. Diese Vierpunktabstützung hat den Vorteil, daß das Fahrzeug als ganzes, wie aus der strichpunktierten Darstellung der Fig. 1 ersichtlich, angehoben werden kann, sobald er die Träger 19 bis 22 aus ihren Führungen ausgefahren und die Stützen 23 bis 26 ausgefahren worden sind.

In den Ausführungsbeispielen der Fig. 1 und 2 sind alle Führungen 31 bis 34 bogenförmig und, wie oben beschrieben, angeordnet. Das Ausführungsbeispiel der Fig. 1 unterscheidet sich vom Ausführungsbeispiel der Fig. 2 nur dadurch, daß die Führungen 31 bis 34, wie aus Fig. 2 ersichtlich, in einer gemeinsamen horizontalen Ebene gemäß dem Hinweispfeil 44 konzentrisch angeordnet sind. Dagegen sind die Führungen 31 bis 34 übereinander in horizontalen parallelen Ebenen angebracht, die durch Hinweispfeile in Fig. 4 mit 45, 46 angedeutet sind.

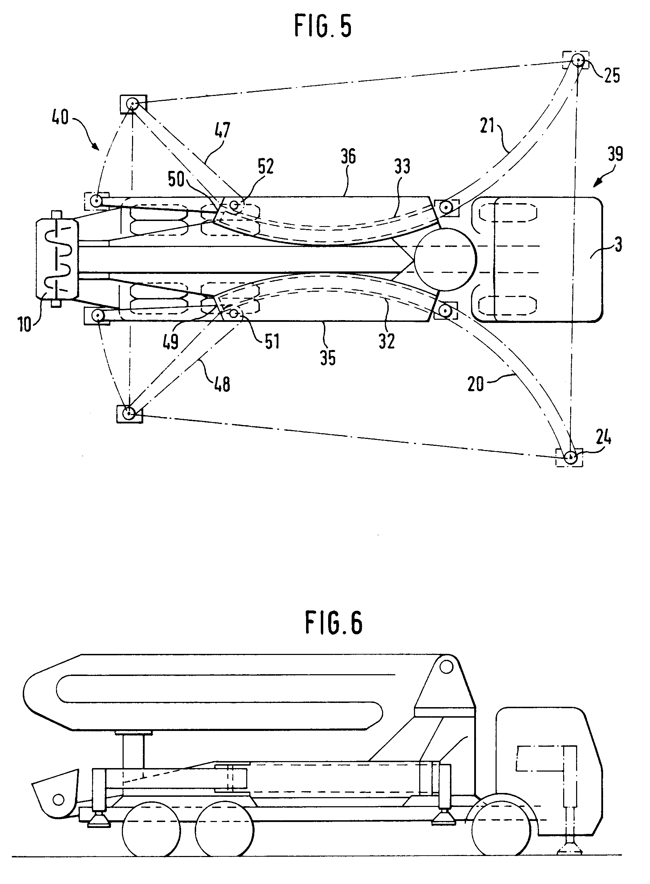

In den Ausführungsbeispielen der Fig. 5 bis 9 sind dagegen die vordere 39 und die hintere Abstützung 40 unterschiedlich ausgebildet. Alle Abstüzungen stimmen jedoch darin überein, daß die vordere Abstützung 39 die bogenförmigen Führungen 32, 33 mit den entsprechend gekrümmten Trägern 20, 21 aufweisen. Dadurch werden maximale Stützweiten in Höhe des Fahrerhauses, wie in den Ausführungsbeispielen der Fig. 1 und 3 gezeichnet, neben dem Fahrzeug 1 erzielt. Die unterschiedlich gegenüber der Abstützung 39 ausgebildete Abstützung 40 verwendet in den Ausführungsbeispielen nach den Fig. 5 bis 8 Schwingen 47 und 48, die vergleichsweise geringere Stützweiten als die Träger 20 und 21 aufweisen. Dadurch ergibt sich anstelle des Ausführungsbeispieles nach den Fig. 3 und 4 gezeichneten Rechtecks, in dessen Ecken die Stützen 23 bis 26 angeordnet sind ein Trapez, dessen kürzere Seite dem Fahrzeugheck mit dem Vorfülltrichter 10 der Betonpumpe zugeordnet ist. Die Schwingengelenke sind neben den inneren Enden 49 und 50 der Führungen 32, 33 bei 51 und 52 angeordnet. Dadurch wird gewährleistet, daß sich die Gesamtlänge der Schwingen 48 in dem Profil zwischen den Profilseiten 35, 36 unterbringen lassen, wenn das Fahrzeug den Fahrbetrieb aufnimmt.

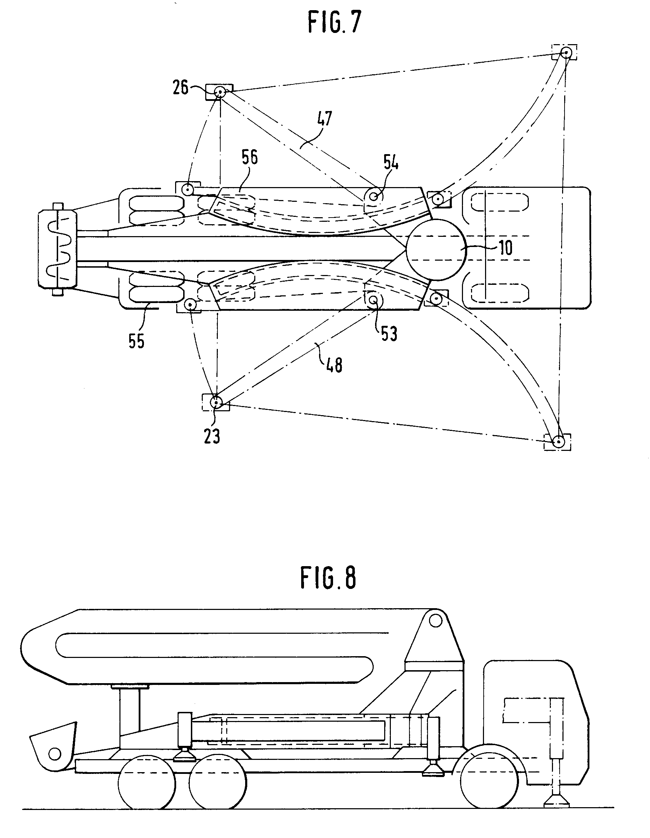

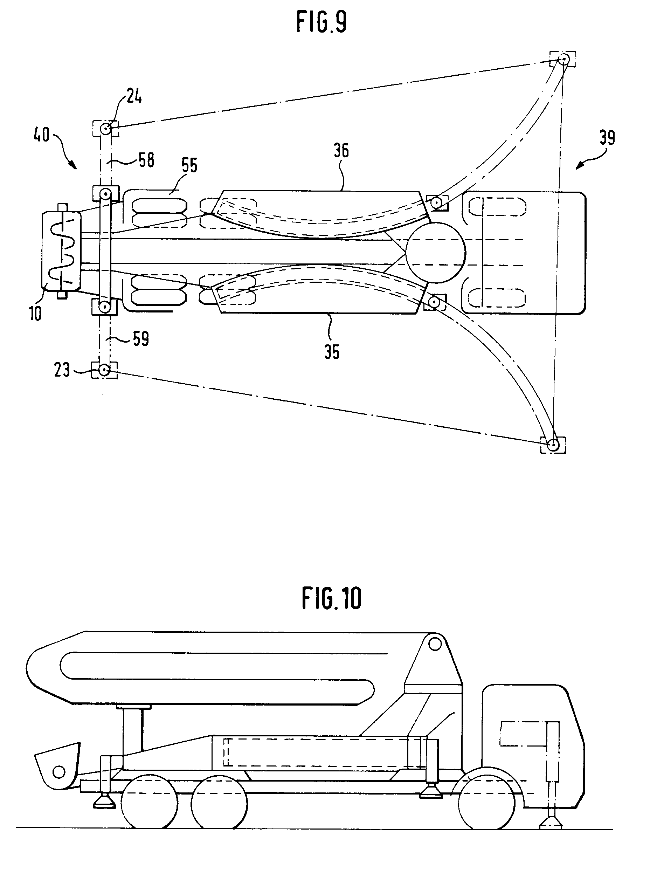

Im Gegensatz zu dem Ausführungsbeispiel nach den Fig. 5 und 6 sind die Schwingengelenke 53, 54 des Ausführungsbeispieles nach den Fig. 7 und 8 ebenfalls in unmittelbarer Nähe des Drehwerkes 10 angeordnet, so daß für den Fahrbetrieb die Stützen 23, 26 zwischen den als starre Achsen vorgesehenen Hinterradachsen 55, 56 liegen, während sie im Ausführungsbeispiel der Fig. 5 und 6 neben den vorderen Stützen 24, 25 zu Liegen kommen.

Im Ausführungsbeispiel der Fig. 9 und 10 entspricht die vordere Abstützung 39 wiederum allen Ausführungsformen. Die rückwärtige Abstützung 40 verwendet jedoch anstatt der Schwingen ausziehbare Querträger 58, 59, die hinter der nachlaufenden Starrachse 55 und vor dem Vorfüllbehälter 10 der Betonpumpe angeordnet sind. Die Stützen 23, 24 lassen sich dadurch im Fahrbetrieb zwischen die Längsprofilseiten 35, 36 des Fahrzeuges einziehen.

Nicht dargestellt ist die Konstruktion der Teleskope im einzelnen. Bei mechanischem Antrieb kann die Energieübertragung für das Aus- und Einfahren der Träger über einen Motorritzel erfolgen, welches mit einer der Krümmung des Bogenteleskopes entsprechend gebogenen Zahnenstange kämmt und von einem gestellfesten Motor angetrieben ist. Von der Kreisbogenform der Teleskope geht u. a. die Ausführungsform nach den Fig. 1 und 2 aus. Der Radius und damit die Lage des Teleskopbogens ist durch die Punkte A, B, C bestimmt. Dabei ergibt sich der Punkt A aus Position der Stütze 21 bzw. 25 im ausgefahrenen Zustand. Diese Position ist ihrerseits durch das dem Kippmoment des Mastes entgegenwirkende Reaktionsmoment gegeben. Der Punkt B wird von dem Träger 20, 21 durchlaufen und gibt die Lage der Stütze 24, 25 im Fahrbetrieb des Fahrzeuges an. An ihn schließt sich das überschiebende Ende des Teleskops an. Der Punkt C liegt an einer der Fahrzeuglängsseiten 35, 36 und markiert gleichzeitig das Ende der Teleskopführung, d. h. der Strecke, die die Träger 20, 21 durchfahren können, bevor sie aus dem Fahrzeugprofil nach außen vorstehen.

Der Abstand zwischen den aus dem weitesten zur Fahrzeugmitte hineinragenden Punkten D (D') und der beiden inneren Führungen 32, 33 markiert einen Freiraum für die auf dem Fahrzeugchassis in der Mitte verlegten Baugruppen.

Da man die Teleskope als statisch stabile Kastenrahmenkonstruktionen ausbildet, müssen die Träger 20, 21 nicht exakt bogenförmig ausgebildet werden. In diesen Fällen kommt als Antriebsvorrichtung auch eine Seilwinde in Betracht, wobei das Zugseil auf der äußeren Bogenseite des Teleskops aufliegend geführt ist und die Winde von einem gestellfest angeordneten Motor angetrieben wird. Ebenso kann der Antrieb über ein Kettenzug erfolgen, der über eine Kettennuß von einem gestellfesten Motor angetrieben wird.

Im allgemeinen wird man den Profilabschnitt, mit dem die Teleskopführung verwirklicht wird, kastenförmig rechteckig ausbilden. Dann ergibt sich die geforderte Drehfestigkeit um die Achse der Träger bereits aus dem Profil. Der Querschnitt kann aber auch rohrförmig sein.

## Patentansprüche

1. Fahrzeug (1) mit einem schwenkbaren, auf einem auf einem Rahmen angeordneten Drehwerk (11) aufgebauten Mast (12), dem eine Rahmenabstützung (18) zugeordnet ist, welche fahrzeugfeste bogenförmige Führungen für in das Fahrzeugprofil einziehbare Träger (19 bis 22) aufweist, wobei die Führungen (31 bis 34) und die Träger in horizontaler Ebene angeordnet sind und die Führungen (31 bis 34) sich im wesentlichen zwischen den Fahrzeugprofillängsseiten (35, 36) erstrecken, dadurch gekennzeichnet, daß die Führungen (31 bis 34) tangential zur Fahrzeuglängsrichtung angeordnet sind und sich jeweils von einer der Fahrzeugprofillängsseiten (35, 36) nach innen im wesentlichen bis zur Fahrzeugmitte (5) und von dieser weiter bis zu derselben Fahrzeugprofillängsseite (35, 36) erstrecken.

2. Fahrzeug nach Anspruch 1, dadurch gekennzeichnet, daß die Führungen (31 bis 34) in einem Hohlprofilabschnitt (37) angeordnet sind, mit dem die Träger jeweils ein Teleskop (38) bilden.

3. Fahrzeug nach einem der Ansprüche 1 oder 2, dadurch gekennzeichnet, daß die Führungen (24, 25) der Abstützung (39) an dem Drehwerk (11) ansetzen und auf einem Kreisbogen liegen und eine weitere Abstützung (40) vorgesehen ist, deren Führungen (31, 34) im Bereich des Fahrzeughecks (43) ansetzen.

4. Fahrzeug nach einem der Ansprüche 1 bis 3, dadurch gekennzeichnet, daß die beiden Abstützungen (39, 40) jeweils aus einem Trägerpaar (19, 22; 20, 21) aus je einem an einer Fahrzeugseite (35, 36) geführten Träger (19 bis 22) bestehen.

5. Fahrzeug nach einem der Ansprüche 1 bis 4, dadurch gekennzeichnet, daß die beiden Führungen (31 bis 34) bogenförmig und in einer gemeinsamen horizontalen Ebene (44) konzentrisch angeordnet sind.

6. Fahrzeug nach einem der Ansprüche 1 bis 4, dadurch gekennzeichnet, daß für je an einer Fahrzeuglängsseite (35, 36) angeordnete Abstützungen mit konzentrisch angeordneten Führungen (31 bis 34) diese in horizontalen parallelen Ebenen (45, 46) angeordnet sind.

7. Fahrzeug nach einem der Ansprüche 1 bis 3, dadurch gekennzeichnet, daß die Abstützungen (39, 40) unterschiedlich ausgebildet sind und die Abstützung (40) mit den bogenförmigen Führungen dem Drehwerk (10) zugeordnet ist.

8. Fahrzeug nach Anspruch 7, dadurch gekennzeichnet, daß die unterschiedlich ausgebildete Abstützung (39) als Schwingen (47, 48) ausgebildete Träger aufweist, deren Gelenk (53, 54) im Bereich des Drehwerkes (11) angeordnet ist.

9. Fahrzeug nach Anspruch 8, dadurch gekennzeichnet, daß die Schwingengelenke (51, 52) neben den Enden (49, 50) der bogenförmigen Führungen (32, 33), aus denen die Träger (20, 21) austreten, angeordnet sind.

10. Fahrzeug nach einem der Ansprüche 1 bis 9, dadurch gekennzeichnet, daß jedes Teleskop einen fahrzeugfesten Antrieb aufweist und die einschiebenden Teleskope von den Trägern (19 bis 22) gebildet werden.

11. Fahrzeug nach Anspruch 10, dadurch gekennzeichnet, daß der fahrzeugfeste Antrieb aus einem gestellfest angeordneten Motor und einem Motorritzel besteht, der in eine Zahnstange eingreift, welche an dem ausschiebenden Träger (19 bis 22) befestigt ist.

12. Fahrzeug nach Anspruch 10, dadurch gekennzeichnet, daß der fahrzeugfeste Antrieb eine gestellfeste Seilwinde aufweist, deren Zugseil auf der äußeren Bogenseite des Teleskopes aufliegend geführt ist, wobei die Seilwinde von einem gestellfest angeordneten Motor angetrieben wird.

13. Fahrzeug nach Anspruch 10, dadurch gekennzeichnet, daß der fahrzeugfeste Antrieb aus einem gestellfest angeordneten Motor besteht, der über ein Vorgelege eine Kettennuß antreibt, wobei mit den Trägern (19 bis 22) wenigstens eine Kette verbunden ist, in die die Kettennuß eingreift.

14. Fahrzeug nach einem der Ansprüche 1 bis 13, dadurch gekennzeichnet, daß das Profil der Teleskopführungen (31 bis 34) kastenförmig rechteckig ausgebildet ist.

15. Fahrzeug nach einem der Ansprüche 9 bis 13, dadurch gekennzeichnet, daß das Profil der Teleskopführungen rohrförmig ist.

16. Fahrzeug nach einem der Ansprüche 1 bis 15, dadurch gekennzeichnet, daß die Führung des Teleskops in Gleitbahnen erfolgt.

17. Fahrzeug nach einem der Ansprüche 1 bis 15, dadurch gekennzeichnet, daß die Führung des Teleskops in Wälzkörperanordnungen erfolgt.

## Claims

1. A vehicle (1) with a pivotable mast (12) which is mounted on a turning mechanism (11) arranged upon a framework and to which is associated a framework support assembly (18) comprising vehicle-mounted curved guide-ways for support beams (19 to 22) that are retractable to within the vehicle profile, whereby the guide-ways (31 to 34) and the supports are arranged in a horizontal plane and the guide-ways (31 to 34) extend essentially between the longitudinal sides of the vehicle profile (35, 36), characterised in that the guide-ways (31 to 34) are arranged to be tangential to the longitudinal direction of the vehicle and extend in each case from one of the longitudinal sides of the vehicle profile (35, 36) essentially as far as the centre of the vehicle (5) and from this point further as far as that same longitudinal side (35, 36) of the vehicle profile.

2. A vehicle according to claim 1, characterised in that the guide-ways (31 to 34) are arranged within a hollow profile section (37) with which in each case the support beams form a telescopic assembly (38).

3. A vehicle according to one of the claims 1 or 2, characterised in that the guide-ways (24, 25) of the support assembly (39) are positioned on the turning mechanism (11) and lie on a circular arc and that an additional support assembly (40) is provided, the guide-ways (31, 34) of which are positioned in the region of the rear of the vehicle (43).

4. A vehicle according to one of the claims 1 to 3, characterised in that the two support assemblies (39, 40) in each case consist of a pair of support beams (19, 22; 20, 21) of the support beams (19 to 22) operating in each case along one side of the vehicle (35, 36).

5. A vehicle according to one of the claims 1 to 4, characterised in that the two guide-ways (31 to 34) are curved and arranged concentrically in a common horizontal plane (44).

6. A vehicle according to one of the claims 1 to 4, characterised in that, in the case of each of the support assemblies arranged along a longitudinal side of the vehicle (35, 36) with concentrically arranged guide-ways (31 to 34), these are arranged in horizontal parallel planes (45, 46).

7. A vehicle according to one of the claims 1 to 3, characterised in that the support assemblies (39, 40) are constructed differently and the support assembly (40) with the curved guide-ways is associated to the turning mechanism (10).

8. A vehicle according to claim 7, characterised in that the differently constructed support assembly (39) comprises support beams in the form of swing arms (47, 48) the articulation joint of which (53, 54) is arranged in the region of the turning mechanism (11).

9. A vehicle according to claim 8, characterised in that the swing arm articulation joints (51, 52) are arranged next to the ends (49, 50) of the curved guide-ways (32, 33) from which the support beams (20, 21) emerge.

10. A vehicle according to one of the claims 1 to 9, characterised in that each of the telescopic assemblies comprises a vehicle-mounted drive mechanism and the impressing telescopes are formed by the support beams (19 to 22).

11. A vehicle according to claim 10, characterised in that the vehicle-mounted drive mechanism consists of an engine rigidly mounted and arranged on the chassis together with a pinion drive motor which engages into a toothed rack attached to the expressing support beam (19 to 22).

12. A vehicle according to claim 10, characterised in that the vehicle-mounted drive mechanism comprises a cable winch which is rigidly mounted on the chassis and the traction cable of which operates lying along the outer side of the curve of the telescopic assembly, whereby the cable winch is powered by an engine rigidly mounted and arranged on the chassis.

13. A vehicle according to claim 10, characterised in that the vehicle-mounted drive mechanism consists of an engine which is rigidly mounted and arranged on the chassis and which drives a sprocket wheel by means of a reduction gear mechanism, whereby at least one chain into which the sprocket wheel engages is connected to the support beams (19 to 22).

14. A vehicle according to one of the claims 1 to 13, characterised in that the profile of the telescopic assembly guide-ways (31 to 34) is constructed as being rectangularly box-shaped.

15. A vehicle according to one of the claims 9 to 13, characterised in that the profile of the telescopic assembly guide-ways is tubular in shape.

16. A vehicle according to one of the claims 1 to 15, characterised in that the operation of the telescopic assembly is effected within slide-ways.

17. A vehicle according to one of the claims 1 to 15, characterised in that the operation of the telescopic assembly is effected within rotary cylinder body arrangements.

## Revendications

1. Véhicule (1) avec un mât orientable (12) monté sur un dispositif de rotation (11) disposé sur un châssis, mât auquel est affecté un châssis stabilisé (18) qui présente des guidages en courbe accolés au véhicule et destinés à des supports escamotables (19 à 22), les guidages (31 à 34) et les supports étant disposés dans un plan horizontal et les guidages (31 à 34) s'étendant pour l'essentiel entre les grands côtés du profil du véhicule (35, 36), caractérisé en ce que les guidages (31 à 34) sont disposés de façon tangentielle par rapport au sens longitudinal du véhicule et en ce qu'ils s'étendent à chaque fois à partir de l'un des grands côtés du profil du véhicule (35, 36) vers l'intérieur essentiellement jusqu'au centre du véhicule (5) puis, à partir de celui-ci, jusqu'au même grand côté du profil du véhicule (35, 36).

2. Véhicule selon la revendication 1, caractérisé en ce que les guidages (31 à 34) sont disposés dans une section de profil creux (37) avec laquelle les supports forment à chaque fois un télescope (38).

3. Véhicule selon l'une des revendications 1 ou 2, caractérisé en ce que les guidages (24, 25) de l'appui (39) sont appliques contre le dispositif de rotation (11) et reposent sur un arc de cercle, et en ce qu' est prévu un appui supplémentaire (40) dont les guidages (31, 34) sont appliqués dans la zone de l'arrière du véhicule (43).

4. Véhicule selon l'une des revendications 1 à 3, caractérisé en ce que les deux appuis (39, 40) se composent chacun d'une paire de supports (19, 22; 20, 21) comprenant chacune un support (19 à 22) guidé sur un côté de véhicule (35, 36).

5. Véhicule selon l'une des revendications 1 à 4, caractérisé en ce que les deux guidages (31 à 34) sont disposés en courbe et de façon concentrique dans un plan horizontal commun (44).

6. Véhicule selon l'une des revendications 1 à 4, caractérisé en ce que, pour des supports disposés sur chacun des grands côtés du véhicule (35, 36), avec des guidages disposés concentriquement (31 à 34), ces derniers sont disposés dans des plans horizontaux parallèles.

7. Véhicule selon l'une des revendications 1 à 3, caractérise en ce que les appuis (39, 40) sont conçus de façon différente et en ce que l'appui (40) est affecté avec les guidages en courbe au dispositif de rotation (10).

8. Véhicule selon la revendication 7, caractérisé en ce que l'appui conçu différemment (39) présente des supports se présentant sous la forme de bielles oscillantes (47, 48) dont l'articulation (53, 54) est disposée dans la zone du dispositif de rotation (11).

9. Véhicule selon la revendication 8, caractérisé en ce que les articulations (51, 52) des bielles sont disposées près des extrémités (49, 50) des guidages en courbe (32, 33) desquels sortent les supports (20, 21).

10. Véhicule selon l'une des revendications 1 à 9, caractérise en ce que chaque télescope présente une commande accolée au véhicule et en ce que les télescopes se rétractant sont formés par les supports (19 à 22).

11. Véhicule selon la revendication 10, caractérisé en ce que la commande accolée au véhicule se compose d'un moteur accolé au bâti et d'un pignon de moteur qui s'engrène dans une crémaillère qui est fixée sur le support qui ressort (19 à 22).

12. Véhicule selon la revendication 10, caractérisé en ce que la commande accolée au véhicule présente un treuil de manoeuvre accolé au bâti dont le câble tracteur est guidé en reposant sur la face extérieure en courbe du télescope, le treuil de manoeuvre étant commandé par un moteur dispose contre le bâti.

13. Véhicule selon la revendication 10, caractérisé en ce que la commande accolée au moteur se compose d'un moteur disposé contre le bâti, moteur qui entraîne un pignon à chaîne par l'intermediaire d'un engrenage, au moins une chaîne dans laquelle s'engrène le pignon à chaîne étant reliée aux supports (19 à 22).

14. Véhicule selon l'une des revendications 1 à 13, caractérisé en ce que le profil des guidages télescopiques (31 à 24) est conçu en forme de caisse et de façon rectangulaire.

15. Véhicule selon l'une des revendications 9 à 13, caractérisé en ce que le profil des guidages télescopiques est tubulaire.

16. Véhicule selon l'une des revendications 1 à 15, caractérisé en ce que le guidage du télescope s'effectue dans des glissières.

17. Véhicule selon l'une des revendications 1 à 15, caractérisé en ce que le guidage du télescope s'effectue dans des dispositions de corps de roulement.
